# FASCICULE DE BREVET EUROPEEN

(11) **EP 0 911 302 B1**
(45) Date de publication et mention de la délivrance du brevet: **28.01.2004**
(21) Numéro de dépôt: 99100997.8
(22) Date de dépôt: 22.02.1996
(51) Int. Cl.: C03C 17/34

(54) **Substrat transparent à revêtement anti-reflets**
Durchsichtiges Substrat mit Antireflektionsbeschichtung
Transparent substrate with anti-reflection coating

(30) Priorité: 23.02.1995 FR 9502102
(43) Date de publication de la demande: 28.04.1999
(62) Demande divisionnaire de: 96400367.7
(73) Titulaire: SAINT-GOBAIN GLASS FRANCE, 92400 Courbevoie (FR)
(72) Inventeur: Anderson, Charles-Edward, 92400 Courbevoie (FR); Macquart, Philippe, 92600 Asnieres (FR)
(74) Mandataire: Renous Chan, Véronique

(56) Documents cités:
- EP-A- 0 263 541
- EP-A- 0 489 621
- EP-A- 0 492 785
- EP-A- 0 521 602
- EP-A- 0 544 577
- WO-A-92/04185
- US-A- 2 617 741
- US-A- 4 995 893
- CHEMICAL ABSTRACTS, vol. 101, no. 8, 20 août 1984 Columbus, Ohio, US; abstract no. 59131a, page 241; XP002001957 & JP 05 945943 A (JAPAN AUTO PARTS INDUSTRIES) 15 mars 1984

## Description

L'invention concerne les substrats transparents, tout particulièrement verriers, qui sont munis d'un revêtement anti-reflets, ainsi que leur mode de fabrication. Elle concerne également leur utilisation, notamment en tant que vitrages. Un revêtement anti-reflets est usuellement constitué d'un empilement de couches minces interférentielles, en général une alternance de couches à haut et bas indices de réfraction. Déposé sur un substrat transparent, un tel revêtement a pour fonction d'en diminuer sa réflexion lumineuse, donc d en augmenter sa transmission lumineuse. Un substrat ainsi revêtu voit donc s'accroître son ratio lumière transmise/lumière réfléchie, ce qui améliore la visibilité des objets placés derrière lui.

On peut alors l'employer dans de nombreuses applications, par exemple pour protéger un tableau éclairé par une lumière placée derrière l'observateur, ou pour constituer ou faire partie d'une vitrine de magasin, afin de mieux distinguer ce qui se trouve dans la vitrine, même lorsque l'éclairage intérieur est faible par rapport à l'éclairage extérieur.

Les performances d'un revêtement anti-reflets peuvent être mesurées ou évaluées suivant différents critères. Viennent en premier, bien sûr, les critères optiques. On peut considérer qu'un « bon » revêtement anti-reflets doit pouvoir abaisser la réflexion lumineuse d'un substrat en verre clair standard jusqu'à une valeur donnée, par exemple 2%, voire 1% et moins. De même, il peut être important que ce revêtement conserve au substrat une colorimétrie satisfaisante, par exemple neutre, très proche de celle du substrat nu. D'autres critères secondaires peuvent aussi être pris en compte suivant l'application envisagée, notamment la durabilité chimique et/ou mécanique du revêtement, le coût des matériaux utilisés ou des techniques à employer pour le fabriquer.

Il est connu de la demande de brevet WO-92/04185 un revêtement anti-reflets déposé sur un substrat transparent et constitué d'une alternance de couches à haut indice en oxyde de niobium et bas indice en oxyde de silicium. Ses performances optiques sont intéressantes. Utiliser de l'oxyde de niobium est avantageux sur le plan industriel, car c'est un matériau qui se dépose plus vite que d'autres oxydes à haut indice du type oxyde de titane par des techniques sous vide connues, du type pulvérisation cathodique réactive. Cependant un tel empilement s'est avéré sensible à tout traitement thermique: à haute température, ses propriétés optiques se modifient de manière défavorable, notamment sur le plan de sa colorimétrie en réflexion. C'est un inconvénient dans la mesure où l'on peut vouloir conférer au substrat, tout particulièrement verrier, et déjà muni de son revêtement, des propriétés mécaniques ou esthétiques qui ne peuvent être obtenues que par des traitements thermiques à des températures qui peuvent approcher la température de ramollissement du verre. Il peut s'agir notamment d'un bombage pour conférer un certain galbe au substrat, d'un recuit pour le durcir, ou d'une trempe pour éviter de blesser en cas de bris.

Le but de l'invention est alors de pallier cet inconvénient, en cherchant à mettre au point un nouveau type de revêtement multicouches anti-reflets qui soit performant optiquement, et qui conserve ses performances, que son substrat porteur soit ensuite soumis ou non à un traitement thermique.

L'invention a pour objet un substrat verrier comportant sur au moins une de ses faces un revêtement anti-reflets comprenant un empilement de couches minces de matériaux diélectriques d'indices de réfraction alternativement forts et faibles. L'invention consiste à prévenir la modification des propriétés optiques du revêtement au cas où le substrat est soumis à un traitement thermique du type trempe, bombage ou recuit, en prévoyant que la (les) couche(s) de l'empilement qui est (sont) susceptible(s) de détérioration au contact d'ions alcalins du type ions sodium émis par diffusion du substrat soit (soient) séparée(s) dudit substrat par au moins une couche qui fait partie du revêtement anti-reflets et qui fait « écran » à la diffusion des ions alcalins.

Il s'est en effet avéré, de manière surprenante, que la modification défavorable de l'aspect optique des revêtements anti-reflets sous l'effet de la chaleur était due à la diffusion d'ions alcalins provenant du verre, ces ions venant s'insérer dans au moins certaines des couches du revêtement, et de fait les détériorer en les modifiant structurellement. La solution selon l'invention a alors consisté non pas à bannir du revêtement anti-reflet tout matériau « sensible » aux ions alcalins, mais plutôt à l'isoler de la surface du verre par une couche « écran » bloquant le processus de diffusion des alcalins. Cette couche est en outre choisie de manière à pouvoir remplir, en parallèle, une fonction optique adéquate dans un revêtement anti-reflets. Il ne s'agit donc pas d'une couche additionnelle venant compliquer la structure d'un revêtement anti-reflets habituel, ce qui est très avantageux sur le plan industriel.

Ces couches « écran » permettent donc de fabriquer des revêtements anti-reflets aptes à supporter sans modification optique notable des traitements thermiques, alors même qu'ils comprennent des matériaux sensibles aux alcalins mais présentant beaucoup d'autres avantages par ailleurs.

Ainsi, les revêtements anti-reflets de l'invention comprennent de préférence des couches d'oxyde de niobium en tant que couches à haut indice de réfraction (indice de réfraction d'environ 2,30), mais disposées dans le revêtement de manière à ne pas pouvoir être en contact avec les alcalins du verre. L.'oxyde de niobium est en effet un matériau intéressant, qui, comme évoqué précédemment, se dépose assez rapidement par pulvérisation cathodique réactive, présente un indice de réfraction suffisamment élevé et une durabilité notamment mécanique, satisfaisante.

Les revêtements anti-reflets selon l'invention peuvent aussi comprendre des couches d'autres matériaux sensibles aux alcalins que l'oxyde de niobium. Il peut s'agir notamment d'oxyde de tungstène, à haut indice de réfraction (indice d'environ 2,17), dont l'aspect optique peut se modifier par insertion d'ions sodium. Il en est de même pour l'oxyde de cérium CeO₂. Il peut aussi s'agir d'oxyde de bismuth, également à haut indice (notamment de l'ordre de 2,30 à 2,52) ou d'oxydes à valences multiples.

De préférence, les revêtements anti-reflets selon l'invention sont conçus de manière à ce que, d'une part, les couches de matériau diélectrique dites à faible indice aient un indice de réfraction compris entre 1,35 et 1,70, notamment entre 1,38 et 1,68, et, d'autre part les couches de matériau diélectrique dites à fort indice aient un indice de réfraction d'au moins 1,80, et notamment compris entre 1,80 et 2,60, de préférence entre 2 et 2,45, par exemple entre 2,10 et 2,35. L'effet anti-reflet n'est en effet pleinement obtenu que s'il y a une différence d'indice de réfraction significative entre les couches à haut et bas indices qui se trouvent alternées.

Plusieurs modes de réalisation de la couche « écran » selon l'invention existent. De manière générale, plus elle va se trouver proche de la surface du verre et plus elle va pouvoir stopper au plus vite la diffusion des ions alcalins à travers l'empilement.

Selon l'invention la couche « écran » une couche à haut indice de réfraction, notamment la toute première qui se trouve au contact du verre. Elle « protège » aussi toutes les autres couches de !'empilement contre l'attaque par les ions alcalins. Elle a de préférence une épaisseur optique comprise entre 25 et 50 nm. On peut la choisir à base de nitrure de silicium Si₃N₄ ou de nitrure d'aluminium AIN, deux matériaux d'indice proche de 2, bloquant les ions alcalins et inertes vis-à-vis d'eux.

Un revêtement anti-reflets selon l'invention peut comprendre seulement deux séquences successives de couches à fort et faible indices. Quatre couches peuvent en effet suffir pour obtenir un effet reflet tout-à-fait remarquable. Dans ce cas, la première séquence comprend la couche « écran » (une couche à haut indice), et la seconde séquence comprend de l'oxyde de niobium, de bismuth ou de tungstène notamment d'une épaisseur optique comprise entre 245 et 290 nm, et une dernière couche à faible indice du type SiO₂ ou mélange d'oxyde de silicium et d'aluminium, notamment d'une épaisseur optique comprise entre 120 et 150 nm.

Selon un mode de réalisation, la couche « écran » selon l'invention se substitue complètement à la première séquence de couches à fort et faible indices, et présente un indice de réfraction intermédiaire, notamment compris entre 1,7 et 1,8. Elle a de préférence une épaisseur optique comprise entre 80 et 120 nm. Une telle couche à indice intermédiaire a un effet optique très similaire à celui d'une séquence couche haut indice/couche bas indice, et présente l'avantage de diminuer le nombre global de couches de l'empilement. Elle est avantageusement à base d'un mélange d'oxyde de silicium et d'étain, de silicium et de zinc, de silicium et de titane, ou encore à base d'oxynitrure de silicium. La proportion relative entre les différents constituants de ces matériaux permet d'ajuster l'indice de réfraction de la couche.

Un exemple de configuration d'empilement utilisant ce type de couche « écran » peut être le suivant :

verre/SiOₓN_{y}/Nb₂O₅/SiO₂

Là encore, la couche « écran » en SiOₓN_{y} « protège » efficacement la couche de Nb₂O₅ qui la recouvre.

Quelque soit le mode de réalisation choisi, l'invention permet la fabrication de substrats verriers porteurs d'un empilement anti-reflets présentant une réflexion lumineuse R_{L} d'au plus 2%, notamment d'au plus 1 %, réflexion qui est conservée à 0,5% ou à 0,3% près, notamment à 0,2% près, et même à ± 0,1 % près si le substrat verrier subit ensuite un traitement thermique du type bombage, trempe, recuit.

De même, leur colorimétrie en réflexion reste quasiment inchangée (notamment dans la tonalité des bleus ou bleus-verts), avec selon le système colorimétrique (L*, a*, b*), des variations de a* et b* en réflexion d'au plus 2, notamment d'au plus 1,5 en valeurs absolues. Globalement les traitements thermiques n'affectent donc pas l'aspect optique en réflexion de ce type d'empilement anti-reflets, si l'on prend comme référence la sensibilité de l'oeil humain.

Il en découle toute une série d'avantages : une seule configuration de revêtement anti-reflets suffit pour fabriquer des vitrages aussi bien bombés que non bombés, trempés que non trempés.

Il devient inutile d'avoir, d'une part, un type de revêtement dépourvu de couches sensibles aux alcalins pour les substrats à traiter thermiquement, et d'autre part un type de revêtement pouvant posséder ce type de couche, par exemple en Nb₂O₅, pour les substrats non destinés à être traités thermiquement. Cela facilite donc la gestion des stocks et permet d'adapter très rapidement la production à des vitrages soit traités, soit non traités, à la demande, sans plus avoir à se préoccuper du type de revêtement anti-reflets.

Un autre avantage est que l'on peut assembler indifféremment, sur une façade de bâtiment, dans une vitrine par exemple, des vitrages à revêtement anti-reflets, les uns traités thermiquement, les autres non traités thermiquement : l'oeil ne pourra pas détecter de disparité dans l'aspect optique global de l'assemblage de vitrages.

Il devient également possible de vendre les vitrages revêtus non traités thermiquement, en laissant à la discrétion de l'acheteur le soin de les traiter thermiquement, en pouvant lui garantir une constance dans leurs propriétés optiques.

De préférence, chacune des faces du substrat verrier est recouverte d'un empilement anti-reflets selon l'invention, afin d'obtenir l'effet anti-reflet maximal.

Selon l'invention, on peut prévoir qu'au moins une des couches à bas indice de l'empilement anti-reflets soit à base d'un mélange d'oxyde de silicium et d'aluminium, (éventuellement fluoré), notamment la dernière couche de l'empilement : une telle couche d'oxyde « mixte » présente en effet une durabilité, notamment chimique, meilleure qu'une couche de SiO₂ pure. On sélectionne le taux optimal d'aluminium dans la couche pour obtenir cette meilleure durabilité, sans cependant trop augmenter l'indice de réfraction de la couche par rapport à de la silice pure, pour ne pas affecter les propriétés optiques de l'anti-reflet, l'oxyde d'aluminium ayant en effet un indice d'environ 1,60 à 1,65 supérieur à celui de SiO₂ qui est d'environ 1,45.

L'invention a aussi pour objet les vitrages incorporant les substrats revêtus, qu'ils soient monolithiques, feuilletés, ou multiples à lame(s) de gaz intercalaire(s).

Ces vitrages peuvent être utilisés aussi bien en tant que vitrages intérieurs ou extérieurs de bâtiment qu'en tant que verre de protection d'objet du type tableau, vitrine, mobilier verrier comme un comptoir ou une vitrine réfrigérée..., qu'en tant que,vitrages automobiles du type pare-brise feuilleté, miroirs, écrans anti-éblouissement pour ordinateurs, verre décoratif.

Le vitrage incorporant le substrat à revêtement anti-reflets selon l'invention peut présenter des propriétés additionnelles intéressantes. Ainsi, il peut s'agir d'un vitrage à fonction de sécurité, comme des vitrages feuilletés commercialisés par SAINT-GOBAIN VITRAGE sous le nom de Stadip, ou de vitrages trempés comme les glaces trempées commercialisées par SAINT-GOBAIN VITRAGE sous le nom de Sekurit. Il peut aussi s'agir de vitrages anti-effraction, comme ceux commercialisés par SAINT-GOBAIN VITRAGE sous le nom de Contrarisc, ou anti-acoustiques, comme ceux commercialisés par SAINT-GOBAIN VITRAGE sous le nom de Contrasonor (doubles vitrages) ou Phonip (vitrages feuilletés), ou encore de protection vis-à-vis du feu (pare-flamme ou coupe-feu).

Le vitrage peut aussi être choisi tel que sur le substrat déjà muni de l'empilement anti-reflets ou sur l'une des faces des autres substrats constitutifs du vitrage, est déposée une couche (ou un empilement de couches) à fonction spécifique, par exemple anti-solaire ou absorbant thermiquement, comme des couches en nitrure de titane, ou encore des couches telles que celles commercialisées sous le nom de Cool-lite ou Antélio ou Cool-lite K par SAINT-GOBAIN VITRAGE, ou encore à fonction anti-ultraviolets, anti-statique (du type couche d'oxyde métallique dopé légèrement conductrice), bas-émissive, comme les couches à base d'argent du type Planitherm ou d'oxyde d'étain dopé du type EKO commercialisées par SAINT-GOBAIN VITRAGE. Dans le cas d'une couche à fonction anti-statique, il est préférable que celle-ci soit disposée sur la face du substrat muni de l'empilement anti-reflets. La couche peut aussi être prévue chauffante (du type couche de métal avec amenées de courant adéquates), ce qui peut-être intéressant notamment pour les vitrines réfrigérées, pour éviter le dépôt de buée à leur surface. Il peut aussi s'agir de couche à propriétés anti-salissures comme une très fine couche de TiO₂, ou encore une couche organique hydrophobe à fonction anti-pluie ou hydrophile à fonction anti-buée. Ccomme exemple de couche hydrophobe, on pourra se reporter à la couche à base d'organo-silane fluorée décrite dans les brevets US-5 368 892 et US-5 389 427.

Il peut aussi s'agir d'une couche d'argenture à fonction miroir. Toutes les configurations sont possibles. Ainsi, dans le cas d'un vitrage monolithique à fonction miroir, on a intérêt à déposer le revêtement anti-reflets en face 1 (c'est-à-dire du côté où se trouve le spectateur) et la couche d'argenture en face 2 (c'est-à-dire du côté où le miroir est accroché à une paroi), l'empilement anti-reflets de l'invention évitant ainsi le dédoublement de l'image réfléchie.

Dans le cas d'un double-vitrage, (où l'on numérote conventionnellement les faces des substrats verriers en commençant par la face la plus extérieure), on peut ainsi disposer l'empilement anti-reflets usuellement en face 1, et les autres couches fonctionnelles en face 2 pour un anti-ultraviolets ou un anti-solaire, 3 pour une couche bas-émissive. Dans un double-vitrage, on peut ainsi avoir au moins un empilement anti-reflets sur l'une des faces des substrats et au moins une autre couche ou un autre empilement de couches apportant une fonctionnalité supplémentaire. Le double-vitrage peut aussi comporter plusieurs revêtements anti-reflets, notamment au moins en face 2 ou 3.

Pour un vitrage monolithique 1 on peut prévoir de déposer une couche à fonction anti-statique, associée à un second empilement anti-reflets.

De même, le verre choisi pour le substrat revêtu de l'empilement selon l'invention ou pour les autres substrats qui lui sont associés pour former un vitrage, peut être particulier, par exemple extra-clair, du type Planilux ou teinté du type Parsol, deux produits commercialisés par SAINT-GOBAIN VITRAGE. Il peut être lui-même filtrant vis-à-vis du rayonnement du type ultraviolet. Le ou les substrats peuvent avoir subi des traitements thermiques, que l'empilement anti-reflets selon l'invention est à même de supporter, comme une trempe, un bombage ou même un pliage, c'est-à-dire un bombage avec un très petit rayon de courbure (application pour les vitrines-comptoirs des magasins en particulier).

Le substrat peut aussi avoir subi un traitement superficiel, notamment un dépolissage, l'empilement anti-reflets pouvant être déposé sur la face dépolie ou sur la face opposée.

Le substrat, où l'un de ceux avec lequel il est associé, peut être aussi du type verre décoratif, imprimé, par exemple comme le produit Albarino, commercialisé par SAINT-GOBAIN VITRAGE, ou sérigraphié.

Un vitrage particulièrement intéressant incorporant le substrat à revêtement anti-reflets selon l'invention est le suivant : il s'agit d'un vitrage comportant une structure feuilletée avec deux substrats verriers associés par une feuille de polymère d'assemblage du type polyvinylbutyral. Au moins un des substrats et de préférence les deux, est muni du revêtement anti-reflets selon l'invention, de préférence en face extérieure, notamment selon la séquence :
revêtement anti-reflets/verre/PVB/verre/revêtement anti-reflets

Cette configuration, notamment avec les deux substrats bombés et/ou trempés, permet l'obtention d'un vitrage automobile, et notamment d'un pare-brise, très avantageux : en effet, les normes imposent dans les automobiles des pare-brises à haute transmission lumineuse, d'au moins 75% en incidence normale. Grâce à l'incorporation de revêtements anti-reflets dans une structure feuilletée de pare-brise usuelle, la transmission lumineuse du vitrage s'en trouve augmentée, ce qui autorise d'abaisser légèrement sa transmission énergétique tout en étant encore aux normes en terme de transmission lumineuse. On peut ainsi augmenter l'effet anti-solaire du pare-brise, par exemple par absorption des substrats en verre. Concrètement, on peut ainsi faire passer la valeur de réflexion lumineuse d'un pare-brise feuilleté standard de 8 à moins de 1%, tout en abaissant sa transmission énergétique de 1 à 10% par exemple en la faisant passer de 85 à 81 %.

L'invention a également pour objet le procédé de fabrication des substrats verriers à revêtement anti-reflets. Un procédé consiste à déposer l'ensemble des couches, successivement les unes après les autres, par une technique sous vide, notamment par pulvérisation cathodique assistée par champ magnétique. Ainsi, on peut déposer les couches d'oxyde par pulvérisation réactive du métal en question en présence d'oxygène, et les couches de nitrure en présence d'azote.

Un autre choix peut consister à déposer tout ou partie des couches de l'empilement, notamment la ou les premières couches, par une technique de pyrolyse de précurseurs adaptés.

Il peut s'agir d'une pyrolyse en phase solide, en ayant recours à des précurseurs sous forme de poudre (par exemple du dibutyldifluorure d'étain pour faire de l'oxyde d'étain), sous forme liquide par exemple en dissolvant le(s) précurseur(s) dans un solvant, ou sous forme gazeuse. Dans ce dernier cas, le précurseur est mis sous forme gazeuse. Il peut par exemple s'agir de tétraorthosilicate TEOS ou de SiH₄ pour faire de l'oxyde de silicium. La pyrolyse peut s'effectuer directement et en continu sur le ruban de verre float chaud, les couches suivantes étant alors déposées ultérieurement sur le verre une fois découpé, par une technique sous vide du type pulvérisation cathodique.

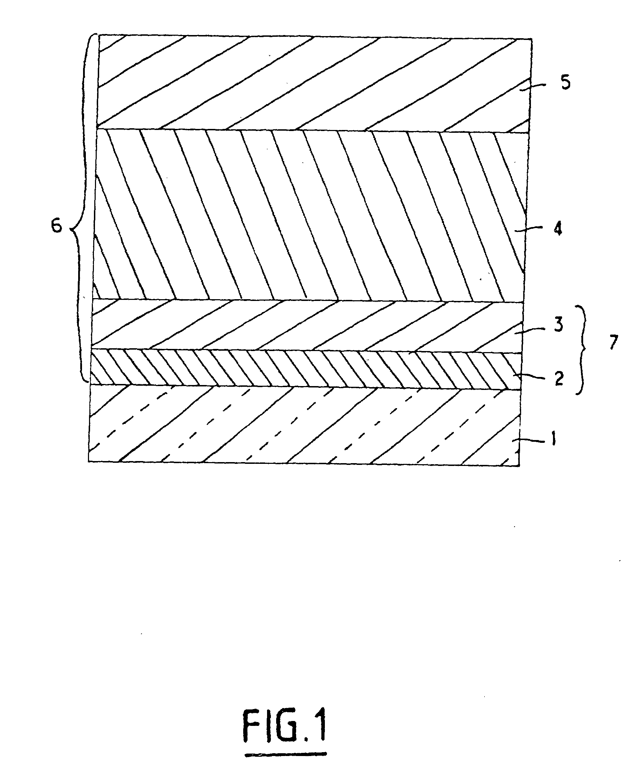

Les détails et caractéristiques avantageuses de l'invention vont maintenant ressortir des exemples suivants non limitatifs, à l'aide de la figure 1.

Cette figure, très schématique, représente en coupe un substrat surmonté d'un empilement anti-reflets selon l'invention (les proportions entre l'épaisseur du substrat et celles des couches n'ont pas été respectées pour en faciliter la lecture). En fait, chacune des faces du substrat est munie d'un empilement identique, mais un seul empilement a été représenté pour plus de clarté. L'utilisation d'un revêtement sur chacune des faces du substrat a été effectué sur l'ensemble des exemples qui suivent.

On précise que dans ces exemples, les dépôts successifs de couches minces se font par pulvérisation cathodique réactive assistée par champ magnétique, mais pourraient être réalisés par toute autre technique sous vide ou du type pyrolyse permettant une bonne maîtrise des épaisseurs de couches obtenues.

Les substrats sur lesquels sont déposés les revêtements anti-reflets sont des substrats de verre silico-sodo-calcique clair du type Planilux et de 3 à 6 mm d'épaisseur, notamment 4 mm.

La figure 1 représentant le substrat de verre 1 qui est revêtu, selon un premier mode de réalisation, sur ses deux faces d'un empilement 6 quadri-couche comportant une alternance de couches minces 2,4 à haut indice et de couches minces 3,5 à bas indice. Un autre mode de réalisation consiste à remplacer les deux premières couches 2, 3 par une couche 7 d'indice intermédiaire.

### EXEMPLE COMPARATIF

Cet exemple utilise un revêtement quadri-couche composé de la séquence suivante :

verre/Nb₂O₅/SiO₂/Nb₂O₅/SiO₂

Les deux couches de Nb₂O₅ d'indice de réfraction d'environ 2,3 sont obtenues par pulvérisation réactive en présence d'oxygène à partir de cibles de niobium, les deux couches de SiO₂ d'indice de réfraction d'environ 1,47 sont obtenues par pulvérisation réactive en présence d'oxygène à partir de cibles de silicium dopé au bore ou à l'aluminium.

Le tableau 1 ci-dessous indique l'épaisseur géométrique en nanomètres de chacune des couches de l'empilement, numérotées en référence à la figure 1.

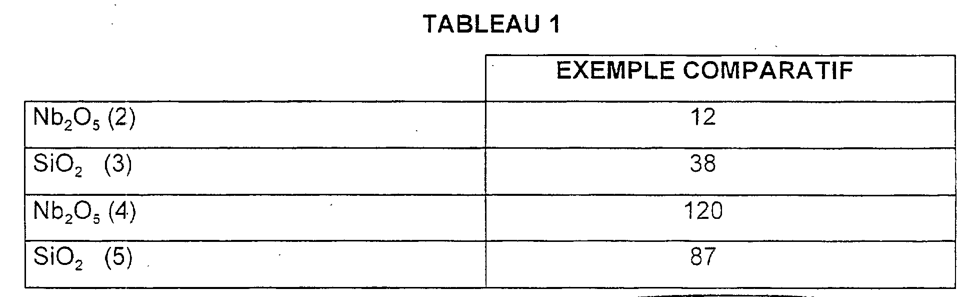

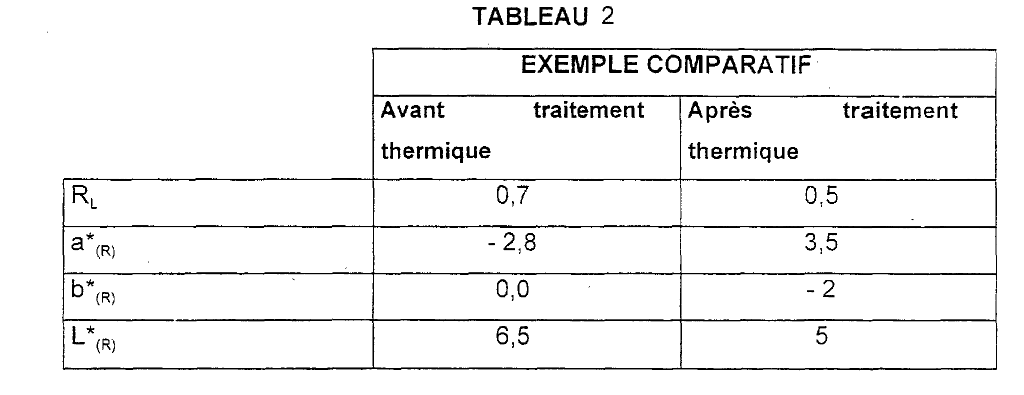

### EXEMPLE 1 SELON L'INVENTION

Cet exemple utilise un revêtement anti-reflets tri-couche, suivant la séquence suivante:

verre/SiOₓN_{y}/Nb₂O₅/SiO₂

Les deux dernières couches sont faites comme les couches de Nb₂O₅ et SiO₂ des exemples précédents. La première couche est obtenue par pulvérisation cathodique réactive en présence d'une atmosphère O₂/N₂ à partir d'une cible de silicium dopé à l'aluminium ou au bore.

La couche de SiOₓN_{y} a un indice de réfraction d'environ 1,75 . Le tableau 5 ci-dessous indique pour chacune des trois couches leurs gammes d'épaisseur géométrique préférées ainsi que leurs épaisseurs précises.

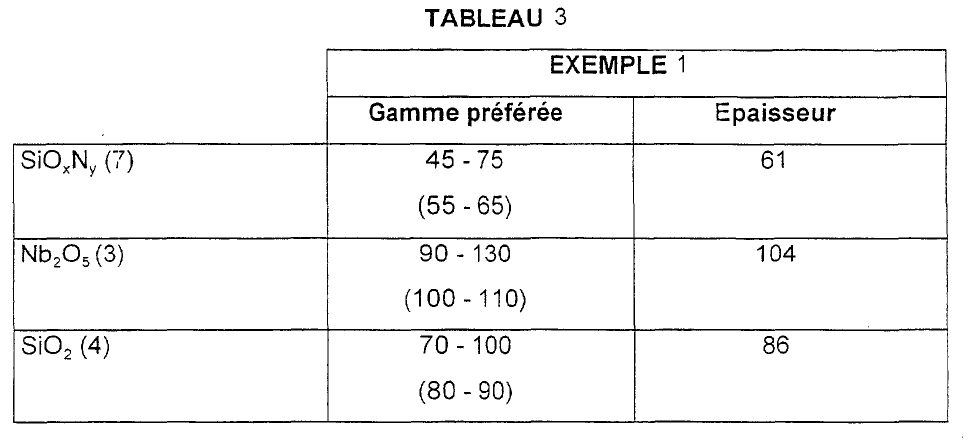

Le substrat est apte à supporter le même type de traitement thermique que celui subi dans les exemples précédents, sans modification notable de son aspect en réflexion.

On voit que :
- les revêtements anti-reflets selon l'invention confèrent aux substrats verriers des valeurs de réflexion lumineuse très faibles, inférieures à 1% (à comparer à la réflexion lumineuse d'environ 8% qu'auraient ces mêmes substrats sans revêtement),
- leur couleur en réflexion est également très neutre, notamment dans les bleus-verts très atténués en ce qui concerne l'exemple 1, ce qui est une tonalité esthétique, recherchée actuellement, notamment pour les vitrages équipant des bâtiments,
- leurs caractéristiques optiques ne se modifient pas, ou très peu, lorsque les substrats sont soumis à un traitement à forte température, et tout particulièrement leur aspect en réflexion.

Ainsi, la variation dans la valeur de R_{L}, notée ΔR_{L}, est minime, inférieure à 0,3% et de l'ordre de 0,1%. Et ce qui est peut-être plus important encore, c'est que leur colorimétrie favorable en réflexion est maintenue : la variation du facteur a*, notée Δa* est en valeurs absolues inférieure à 2,0, notamment à 1,35. La variation du facteur b* notée Δb* est du même ordre.

Cela n'est pas le cas de l'exemple comparatif 1. Si l'on se reporte au tableau 2 on voit en effet que le traitement thermique modifie notablement l'aspect en réflexion du substrat : dans l'exemple selon l'invention, la tonalité bleue-verte était maintenue, alors que dans cet exemple comparatif, la couleur en réflexion bascule du vert au mauve/violet, tonalité peu appréciée sur le plan esthétique. Ce changement de couleur est parfaitement repérable par un observateur : si l'on calcule pour cet exemple comparatif, la valeur de ΔE précédemment définie, on aboutit à un chiffre d'environ 7,7, valeur appartenant à la plage de sensibilité de l'oeil humain.

Les raisons de ce changement d'aspect sont que la première couche d'oxyde de niobium, c'est-à-dire la plus proche du verre, subit sous l'effet de diffusion des ions sodium Na⁺ à haute température, une modification structurelle très importante : elle se transforme en un composé mixte avec du sodium et du niobium ne présentant plus aucune des propriétés de l'oxyde de départ.

Il en serait de même pour l'oxyde de tungstène ou de bismuth, l'oxyde de tungstène étant par ailleurs bien connu pour se colorer fortement par insertion d'ions sodium.

L'invention permet donc d'établir un compromis, en conservant dans ses empilements anti-reflets des oxydes du type Nb₂O₅, WO₃, CeO₂ ou Bi₂O₃ sensibles aux alcalins, mais en prévoyant de les isoler du verre par des couches « écran » adaptées, ceci afin de fabriquer des vitrages que l'on peut sans crainte durcir, bomber ou tremper après dépôt des empilements.

## Revendications

1. Substrat verrier (1) comportant sur au moins une de ses faces un revêtement antireflets (6) fait d'un empilement de couches minces de matériau diélectrique d'indices de réfraction alternativement forts et faibles, ***caractérisé en ce que*** ledit empilement comprend une (des) couche(s) (4) susceptible(s) de détérioration au contact d'ions alcalins, à fort indice et à base d'oxyde de niobium Nb₂O₅, d'oxyde de tungstène WO₃, d'oxyde de bismuth Bi₂O₃, d'oxyde de cérium CeO₂, ou d'oxydes à valences multiples, ***et en ce qu***'en vue de prévenir la modification des propriétés optiques dudit revêtement (6) au cas où ledit substrat (1) est soumis à un traitement thermique du type trempe, bombage ou recuit, la (les) couche(s) (4) de l'empilement susceptible(s) de détérioration au contact d'ions alcalins du type ions sodium est (sont) séparée(s) dudit substrat (1) par au moins une couche faisant partie du revêtement antireflets (6) et faisant « écran » à la diffusion des alcalins, ladite couche « écran » étant une couche à fort indice de l'empilement ou se substituant à la première séquence de couches à fort et faible indice en présentant un indice de réfraction intermédiaire.

2. Substrat verrier (1) selon la revendication 1, ***caractérisé en ce que*** les couches de matériau diélectrique dites à faible indice (3, 5) ont un indice de réfraction compris entre 1,35 et 1,70, notamment entre 1,38 et 1,65 et **en ce que** les couches de matériau diélectrique dites à fort indice (2, 4) ont un indice de réfraction d'au moins 1,80, notamment compris entre 1,80 et 2,60, de préférence entre 2,10 et 2,35.

3. Substrat verrier (1) selon l'une des revendications précédentes, ***caractérisé en ce que*** la couche « écran » est la première couche (2) à fort indice de l'empilement (6), de préférence ayant une épaisseur optique de 25 à 50 nm.

4. Substrat verrier (1) selon l'une des revendications précédentes, ***caractérisé en ce que*** la couche « écran » à fort indice est à base de nitrure de silicium Si₃N₄ ou de nitrure d'aluminium AlN.

5. Substrat verrier (1) selon l'une des revendications précédentes, ***caractérisé en ce que*** le revêtement antireflets (6) comprend deux séquences successives de couches à fort et faible indices, la première séquence (2, 3) comprenant la couche « écran », la seconde séquence (4, 5) comprenant une couche d'oxyde de niobium, ou d'oxyde de bismuth ou d'oxyde de tungstène, notamment d'environ 240 à 290 nm d'épaisseur optique, et une couche à faible indice du type SiO₂ ou mélange d'oxydes de silicium et d'aluminium, notamment de 120 à 150 nm d'épaisseur optique.

6. Substrat verrier (1) selon la revendication 5, ***caractérisé en ce que*** la seconde séquence (4, 5) comprend une couche « globale » à haut indice composée d'une superposition de couches à haut indice, notamment deux ou trois, dont au moins une couche en oxyde de niobium, de bismuth ou de tungstène.

7. Substrat verrier (1) selon l'une des revendications 1 ou 2, ***caractérisé en ce que*** la couche « écran » (7) se substitue à la première séquence (2, 3) de couches à fort et faible indices et présente un indice de réfraction intermédiaire compris entre 1,7 et 1,8 et de préférence une épaisseur optique de 80 à 120 nm.

8. Substrat verrier (1) selon l'une des revendications 1, 2 ou 7, ***caractérisé en ce que*** la couche « écran » (7) à indice intermédiaire est à base d'un mélange d'oxydes de silicium et d'étain, de silicium et de zinc, de silicium et de titane ou encore à base d'oxynitrure de silicium.

9. Substrat verrier (1) selon la revendication 8, ***caractérisé en ce que*** le revêtement antireflets (6) comprend la séquence SiOₓN_{y}/Nb₂O₅/SiO₂.

10. Substrat verrier (1) selon l'une des revendications précédentes, ***caractérisé en ce qu'au*** moins une des couches à bas indice de l'empilement antireflets (6) est à base d'un mélange d'oxyde de silicium et d'oxyde d'aluminium, notamment la dernière couche (5) de l'empilement.

11. Substrat verrier (1) selon l'une des revendications précédentes, ***caractérisé en ce qu'il*** comporte un revêtement antireflets (6) sur chacune de ses faces.

12. Substrat verrier (1) selon l'une des revendications précédentes, ***caractérisé en ce qu'il*** présente une réflexion lumineuse R_{L} d'au plus 2%, notamment d'au plus 1% et une couleur bleue ou bleu-vert en réflexion, avec des variations de R_{L} d'au plus 0,3%, notamment d'au plus 0,1% et des variations de a* et b* en réflexion d'au plus 2, notamment d'au plus 1,5 après traitement thermique du type bombage, trempe, recuit.

13. Vitrage monolithique, feuilleté ou multiple à lame(s) de gaz intercalaire(s), ***caractérisé en ce qu'il*** incorpore le substrat (1) à revêtement antireflets (6) selon l'une des revendications précédentes.

14. Vitrage selon la revendication 13, ***caractérisé en ce qu'il*** est à fonction anti-solaire, de sécurité, anti-effraction, anti-acoustique ou protection vis-à-vis du feu.

15. Vitrage selon la revendication 13 ou 14, ***caractérisé en ce que*** sur le substrat (1) muni du revêtement antireflets (6) ou sur au moins un des autres substrats constitutifs dudit vitrage, est déposée une couche (ou un empilement de couches) à fonction anti-solaire, absorbante, anti-ultraviolet, anti-statique, bas-émissive, chauffante ou anti-salissures, ou encore une couche organique hydrophobe à fonction anti-pluie ou hydrophile à fonction anti-buée, ou encore une couche d'argenture à fonction miroir.

16. Vitrage selon la revendication 13, 14 ou 15, ***caractérisé en ce que*** le substrat (1) muni du revêtement antireflets (6), ou au moins un des autres substrats constitutifs dudit vitrage, a subi un traitement de surface du type dépolissage, ou est imprimé ou sérigraphié.

17. Vitrage selon l'une des revendications 13 à 16, ***caractérisé en ce que*** le substrat (1) muni du revêtement antireflets (6) ou au moins un des autres substrats constitutifs dudit vitrage est en verre extra-clair, ou en verre teinté dans la masse, ou trempé, ou armé, ou bombé ou plié, ou filtrant les ultraviolets.

18. Vitrage selon l'une des revendications 13 à 17, ***caractérisé en ce qu'il*** comporte une structure feuilletée comprenant deux substrats verriers associés par une feuille de polymère d'assemblage du type polyvinylbutyral, au moins un des substrats, et de préférence les deux substrats, étant muni d'un revêtement antireflets (6), de préférence en face extérieure, notamment selon la séquence :
revêtement antireflets (6)/verre/PVB/verre/revêtement antireflets (6)

19. Vitrage selon la revendication 18, ***caractérisé en ce que*** les substrats sont bombés et/ou trempés, en vue de constituer un vitrage automobile, notamment un parebrise.

20. Application des substrats (1) à revêtement antireflets (6) selon l'une des revendications 1 à 12 ou des vitrages selon l'une des revendications 13 à 19 à la fabrication de vitrages intérieurs ou extérieurs de bâtiment, ou de verres de protection d'objets du type tableaux, de vitrages automobiles du type parebrise feuilleté, de miroirs, d'écrans anti-éblouissement pour ordinateurs, de verre décoratif, de vitrine, de mobilier verrier du type comptoir de magasin ou vitrine réfrigérée.

21. Procédé de fabrication du substrat verrier (1) à revêtement antireflets (6) selon l'une des revendications 1 à 12, ***caractérisé en ce qu'on*** dépose la ou les premières couches du revêtement par pyrolyse de précurseurs adaptés, notamment directement sur le ruban de verre float, et **en ce qu'**on dépose les couches suivantes par une technique de dépôt sous vide du type pulvérisation cathodique, une fois le verre découpé.

## Patentansprüche

1. Glassubstrat (1), das auf mindestens einer Seite eine Antireflexbeschichtung (6) umfasst, die aus einem Aufbau aus dünnen Schichten aus dielektrischem Material mit abwechselnd hohem und niedrigem Brechungsindex hergestellt ist, **dadurch gekennzeichnet, dass** der Aufbau eine oder mehrere Schichten (4), die im Kontakt mit Alkalimetallionen beschädigt werden können, mit einem hohen Brechungsindex und auf der Basis von Nioboxid, Nb₂O₅, Wolframoxid, WO₃, Wismutoxid, Bi₂O₃, Ceroxid, CeO₂, oder Oxiden mit mehreren Wertigkeiten enthält, **und dass,** um eine Veränderung der optischen Eigenschaften der Beschichtung (6) zu verhindern, wenn das Substrat (1) einer Wärmebehandlung vom Typ Vorspannen, Biegen oder Abkühlen im Kühlofen unterworfen wird, die Schicht/en (4) des Aufbaus, die bei Kontakt mit Alkalimetallionen vom Typ Natriumionen beschädigt werden kann/können, von diesem Substrat (1) durch mindestens eine Schicht getrennt wird/werden, die Bestandteil der Antireflexbeschichtung (6) ist und als Schutz vor der Diffusion der Alkalimetallionen dient, wobei diese Schutzschicht eine Schicht mit hohem Brechungsindex des Aufbaus ist oder die erste Abfolge aus Schichten mit hohem und niedrigem Brechungsindex ersetzt und dabei einen dazwischen liegenden Brechungsindex besitzt.

2. Glassubstrat (1) nach Anspruch 1, **dadurch gekennzeichnet, dass** die Schichten (3, 5) aus einem dielektrischen Material mit niedrigem Brechungsindex einen Brechungsindex von 1,35 bis 1,70 und insbesondere zwischen 1,38 und 1,65 besitzen, **und dass** die Schichten (2, 4) aus dielektrischem Material mit hohem Brechungsindex einen Brechungsindex von mindestens 1,80, insbesondere von 1,80 bis 2,60, und vorzugsweise zwischen 2,10 und 2,35 besitzen.

3. Glassubstrat (1) nach einem der vorhergehenden Ansprüche, **dadurch gekennzeichnet, dass** die Schutzschicht die erste Schicht (2) mit hohem Brechungsindex des Aufbaus (6) ist und vorzugsweise eine optische Dicke von 25 bis 50 nm besitzt.

4. Glassubstrat (1) nach einem der vorhergehenden Ansprüche, **dadurch gekennzeichnet, dass** die Schutzschicht mit hohem Brechungsindex auf der Basis von Siliciumnitrid, Si₃N₄, oder Aluminiumnitrid, AIN, ist.

5. Glassubstrat (1) nach einem der vorhergehenden Ansprüche, **dadurch gekennzeichnet, dass** die Antireflexbeschichtung (6) zwei aufeinander folgende Abfolgen aus Schichten mit hohem und mit niedrigem Brechungsindex umfasst, wobei die erste Abfolge (2, 3) die Schutzschicht enthält und die zweite Abfolge (4, 5) eine Schicht aus Nioboxid, Wismutoxid oder Wolframoxid mit einer optischen Dicke von insbesondere etwa 240 bis 290 nm und eine Schicht mit niedrigem Brechungsindex vom Typ SiO₂ oder ein Gemisch aus Siliciumoxid und Aluminiumoxid mit einer optischen Dicke von insbesondere 120 bis 150 nm umfasst.

6. Glassubstrat (1) nach Anspruch 5, **dadurch gekennzeichnet, dass** die zweite Abfolge (4, 5) eine "Gesamtschicht" mit hohem Brechungsindex umfasst, die aus einer Übereinanderanordnung von Schichten mit hohem Brechungsindex, insbesondere zwei oder drei, wovon mindestens eine Schicht aus Nioboxid, Wismutoxid oder Wolframoxid besteht, aufgebaut ist.

7. Glassubstrat (1) nach Anspruch 1 oder 2, **dadurch gekennzeichnet, dass** die Schutzschicht (7) die erste Abfolge (2, 3) aus Schichten mit hohem und mit niedrigem Brechungsindex ersetzt und einen dazwischen liegenden Brechungsindex von 1,7 bis 1,8 und vorzugsweise eine optische Dicke von 80 bis 120 nm besitzt.

8. Glassubstrat (1) nach einem der Ansprüche 1, 2 oder 7, **dadurch gekennzeichnet, dass** die Schutzschicht (7) mit Zwischen-Brechungsindex auf der Basis eines Gemischs aus Oxiden des Siliciums und Zinns, des Siliciums und Zinks, des Siliciums und Titans oder auch auf der Basis von Siliciumnitridoxid ist.

9. Glassubstrat (1) nach Anspruch 8, **dadurch gekennzeichnet, dass** die Antireflexbeschichtung (6) die Abfolge SiOₓN_{y}/Nb₂O₅/SiO₂ umfasst.

10. Glassubstrat (1) nach einem der vorhergehenden Ansprüche, **dadurch gekennzeichnet, dass** mindestens eine Schicht mit niedrigem Brechungsindex des Antireflexaufbaus (6), insbesondere die letzte Schicht (5), auf der Basis eines Gemischs aus Siliciumoxid und Aluminiumoxid ist.

11. Glassubstrat (1) nach einem der vorhergehenden Ansprüche, **dadurch gekennzeichnet, dass** es auf beiden Seiten eine Antireflexbeschichtung (6) umfasst.

12. Glassubstrat (1) nach einem der vorhergehenden Ansprüche, **dadurch gekennzeichnet, dass** es einen Lichtreflexionsgrad, R_{L}, von höchstens 2 % und insbesondere höchstens 1 % und eine blaue oder blaugrüne Färbung bei Reflexion mit Schwankungen von R_{L} um höchstens 0,3 % und insbesondere höchstens 0,1 % und Schwankungen von a* und b* bei Reflexion von höchstens 2 und insbesondere höchstens 1,5 nach einer Wärmebehandlung vom Typ Biegen, Vorspannen und Abkühlen im Kühlofen besitzt.

13. Einscheibenglas, Mehrscheibenverbundglas oder Mehrscheibenglas mit einer bzw. mehreren Gasfüllungen, **dadurch gekennzeichnet, dass** es das Substrat (1) mit der Antireflexbeschichtung (6) nach einem der vorhergehenden Ansprüche enthält.

14. Glas nach Anspruch 13, **dadurch gekennzeichnet, dass** es eine angriffshemmende, Sonnenschutz-, Sicherheits-, Schallschutz- oder Brandschutzfunktion besitzt.

15. Glas nach Anspruch 13 oder 14, **dadurch gekennzeichnet, dass** auf dem Substrat (1), das mit der Antireflexbeschichtung (6) versehen ist, oder auf mindestens einem weiteren Substrat, das Bestandteil des Glases ist, eine Schicht (oder ein Schichtaufbau) mit vor Sonneneinstrahlung schützender, absorbierender, vor UV-Strahlung schützender, antistatischer, niedrig emittierender, beheizender oder Schmutz abweisender Funktion, eine organische Schicht, die hydrophob ist, mit Regen abweisender Funktion oder die hydrophil ist, mit Beschlag abweisender Funktion oder auch eine Silberschicht mit Spiegelfunktion aufgebracht ist.

16. Glas nach Anspruch 13, 14 oder 15, **dadurch gekennzeichnet, dass** das mit der Antireflexbeschichtung (6) versehene Substrat (1) oder mindestens ein weiteres Substrat, das Bestandteil des Glases ist, einer Oberflächenbehandlung vom Typ Mattieren unterworfen, ein Ornamentglas, ein maschinengewalztes oder ein mit Siebdruck versehenes Glas ist.

17. Glas nach einem der Ansprüche 13 bis 16, **dadurch gekennzeichnet, dass** das mit der Antireflexbeschichtung (6) versehene Substrat (1) oder mindestens ein weiteres Substrat, das Bestandteil des Glases ist, aus einem extra weißen Glas oder einem in der Masse gefärbten, vorgespannten, armierten, gewölbten bzw. gebogenen oder die UV-Strahlung filternden Glas besteht.

18. Glas nach einem der Ansprüche 13 bis 17, **dadurch gekennzeichnet, dass** es einen Verbundaufbau umfasst, der zwei Glassubstrate enthält, die durch eine Zwischenfolie aus einem Polymer vom Typ Polyvinylbutyral miteinander verbunden sind, wobei mindestens ein Substrat und vorzugsweise beide Substrate mit einer Antireflexbeschichtung (6), vorzugsweise auf der Außenseite, insbesondere mit der Abfolge:
Antireflexbeschichtung (6)/Glas/PVB/Glas/Antireflexbe-schichtung (6)
versehen ist/sind.

19. Glas nach Anspruch 18, **dadurch gekennzeichnet, dass** die Substrate gebogen und/oder vorgespannt sind, um ein Autoglas, insbesondere eine Frontscheibe, zu bilden.

20. Verwendung der Substrate (1) mit Antireflexaufbau (6) nach einem der Ansprüche 1 bis 12 oder der Gläser nach einem der Ansprüche 13 bis 19 zur Herstellung von Innen- oder Außenverglasungen für Gebäude, Gläsern zum Schutz von Objekten wie Bildern, Autoglas vom Typ Verbundfrontscheibe, Spiegeln, entspiegelten Bildschirmen für Computer, Ornamentgläsern, Schaufenstern und Glasmöbeln vom Typ Ladentheke oder Kühltruhe.

21. Verfahren zur Herstellung des Glassubstrats (1) mit Antireflexbeschichtung (6) nach einem der Ansprüche 1 bis 12, **dadurch gekennzeichnet, dass** die erste/n Schicht/en der Beschichtung durch Pyrolyse geeigneter Vorläufer, insbesondere direkt auf dem Floatglasband, aufgebracht wird/werden, **und dass** die folgenden Schichten durch ein Vakuumabscheideverfahren vom Typ Kathodenzerstäubung nach dem Zuschneiden des Glases aufgebracht werden.

## Claims

1. Glass substrate (1) comprising, on at least one of its faces, a non-reflective covering (6) made from a stack of thin layers of dielectric material with alternately high and low refractive indices, **characterised in that** the said stack comprises one or more layers (4) liable to deteriorate in contact with alkali ions, with a high index and based on niobium oxide Nb₂O₅, tungsten oxide WO₃, bismuth oxide Bi₂O₃, cerium oxide CeO₂ or oxides with multiple valencies, and **in that**, with a view to preventing modification of the optical properties of the said covering (6) in the case where the said substrate (1) is subjected to heat treatment of the toughening, curving or annealing type, the layer or layers (4) in the stack liable to deteriorate in contact with alkali ions of the sodium ion type is or are separated from the said substrate (1) by at least one layer forming part of the non-reflective covering (6) and forming a "screen" against the diffusion of the alkalis, the said "screen" layer being a layer with a high index in the stack or being substituted for the first sequence of layers with high and low index whilst having an intermediate refractive index.

2. Glass substrate (1) according to Claim 1, **characterised in that** the so-called low-index layers of dielectric material (3, 5) have a refractive index of between 1.35 and 1.70, in particular between 1.38 and 1.65, and **in that** the so-called high-index layers of dielectric material (2, 4) have a refractive index of at least 1.80, in particular between 1.80 and 2.60, preferably between 2.10 and 2.35.

3. Glass substrate (1) according to one of the preceding claims, **characterised in that** the "screen" layer is the first layer (2) with a high index in the stack (6), preferably having an optical thickness of between 25 and 50 nm.

4. Glass substrate (1) according to one of the preceding claims, **characterised in that** the "screen" layer with a high index is based on silicon nitride Si₃N₄ or aluminium nitride AlN.

5. Glass substrate (1) according to one of the preceding claims, **characterised in that** the non-reflective covering (6) comprises two successive sequences of layers with high and low indices, the first sequence (2, 3) comprising the "screen" layer, the second sequence (4, 5) comprising a layer of niobium oxide or bismuth oxide or tungsten oxide, in particular with an optical thickness of approximately 240 to 290 nm, and a low-index layer of the SiO₂ type or a mixture of silicon and aluminium oxides, in particular with an optical thickness of 120 to 150 nm.

6. Glass substrate (1) according to Claim 5, **characterised in that** the second sequence (4, 5) comprises a "global" layer with a high index composed of a superimposition of high-index layers, in particular two or three, including at least one layer made from niobium, bismuth or tungsten oxide.

7. Glass substrate (1) according to one of Claims 1 or 2, **characterised in that** the "screen" layer (7) is substituted for the first sequence (2, 3) of layers with high and low indices and has an intermediate refractive index of between 1.7 and 1.8 and preferably an optical thickness of 80 to 120 nm.

8. Glass substrate (1) according to one of Claims 1, 2 or 7, **characterised in that** the "screen" layer (7) with an intermediate index is based on a mixture of silicon and tin, silicon and zinc or silicon and titanium oxides or based on silicon oxynitride.

9. Glass substrate (1) according to Claim 8, **characterised in that** the non-reflective covering (6) comprises the sequence SiOₓN_{y}/Nb₂O₅/SiO₂.

10. Glass substrate (1) according to one of the preceding claims, **characterised in that** at least one of the low-index layers in the non-reflective stack (6) is based on a mixture of silicon oxide and aluminium oxide, in particular the last layer (5) in the stack.

11. Glass substrate (1) according to one of the preceding claims, **characterised in that** it comprises a non-reflective covering (6) on each of its faces.

12. Glass substrate (1) according to one of the preceding claims, **characterised in that** it has a light reflection R_{L} of no more than 2%, in particular no more than 1%, and a blue or blue-green colour in reflection, with variations in R_{L} of no more than 0.3%, in particular no more than 0.1%, and variations in a* and b* in reflection of no more than 2, in particular no more than 1.5, after heat treatment of the curving, toughening or annealing type.

13. Monolithic glazing, laminated or multiple with an intermediate layer or layers of gas, **characterised in that** it incorporates the substrate (1) with non-reflective covering (6) according to one of the preceding claims.

14. Glazing according to Claim 13, **characterised in that** it has an anti-solar, security, anti-break-in, anti-acoustic or fire protection function.

15. Glazing according to Claim 13 or 14, **characterised in that**, on the substrate (1) provided with the non-reflective covering (6) or on at least one of the other substrates constituting the said glazing, there is deposited a layer (or a stack of layers) with an anti-solar, absorbent, anti-ultraviolet, antistatic, low-emissive, heating or anti-soiling function, or a hydrophobic organic layer with an anti-rain function or hydrophilic with an anticondensation function, or a layer of silvering with a mirror function.

16. Glazing according to Claim 13, 14 or 15, **characterised in that** the substrate (1) provided with the non-reflective covering (6), or at least one of the other substitutes constituting the said glazing, has undergone a surface treatment of the frosting type, or is printed or screenprinted.

17. Glazing according to one of Claims 13 to 16, **characterised in that** the substrate (1) provided with the non-reflective covering (6) or at least one of the other substrates constituting the said glazing is made from extra clear glass, or from self-coloured or toughened or reinforced or curved or bent glass, or glass filtering ultraviolet.

18. Glazing according to one of Claims 13 to 17, **characterised in that** it comprises a laminated structure comprising two glass substrates associated by means of an assembling polymer sheet of the polyvinyl butyral type, at least one of the substrates, and preferably both substrates, being provided with a non-reflective covering (6), preferably on the external face, in particular according to the sequence:
non-reflective covering (6)/glass/PVB/glass/non-reflective covering (6) .

19. Glazing according to Claim 18, **characterised in that** the substrates are curved and/or toughened, with a view to constituting a car window, in particular a windscreen.

20. Application of the substrates (1) with non-reflective covering (6) according to one of Claims 1 to 12 or glazings according to one of Claims 13 to 19 to the manufacture of internal or external building windows, or glasses for protecting objects of the picture type, car windows of the laminated windscreen type, mirrors, antidazzle screens for computers, decorative glass, shop windows, or glass furniture of the shop counter or refrigerated display type.

21. Method of manufacturing the glass substrate (1) with a non-reflective covering (6) according to one of Claims 1 to 12, **characterised in that** the first layer or layers in the covering are deposited by the pyrolysis of suitable precursors, in particular directly on the float glass ribbon, and **in that** the following layers are deposited by means of a vacuum deposition technique of the cathodic sputtering type, once the glass has been cut.
